# EUROPÄISCHE PATENTSCHRIFT

(11) **EP 3 588 711 B1**
(45) Veröffentlichungstag und Bekanntmachung des Hinweises auf die Patenterteilung: **23.12.2020**
(21) Anmeldenummer: 19177022.1
(22) Anmeldetag: 28.05.2019
(51) Int. Cl.: H02G 3/12

(54) **MONTAGEHILFE FÜR EINE UNTERPUTZDOSE, VERFAHREN ZUM MONTIEREN UND ANORDNUNG**
MOUNTING AID FOR A FLUSH-MOUNTED BOX, METHOD FOR MOUNTING AND ASSEMBLY
AIDE AU MONTAGE POUR UNE BOÎTE DE MONTAGE ENCASTRÉE, PROCÉDÉ DE MONTAGE ET ASSEMBLAGE

(30) Priorität: 26.06.2018 DE 102018210360
(43) Veröffentlichungstag der Anmeldung: 01.01.2020
(73) Patentinhaber: Adolf Würth GmbH & Co. KG, 74653 Künzelsau (DE); Würth International AG, 7000 Chur (CH)
(72) Erfinder: Reuther, Herbert, 74238 Krautheim (DE); Wiest, Stefan, 74638 Waldenburg (DE)
(74) Vertreter: Patentanwälte Ruff, Wilhelm, Beier, Dauster & Partner mbB

(56) Entgegenhaltungen:
- EP-A2- 0 303 903
- DE-A1- 10 359 004
- DE-A1- 19 958 128
- DE-A1- 19 960 673
- DE-U1-202008 013 362
- FR-A1- 2 668 864

## Beschreibung

Die Erfindung betrifft eine Montagehilfe für eine Unterputzdose, wobei die Unterputzdose in einer Ausnehmung, insbesondere in Mauerwerk, anbringbar ist und wobei die Unterputzdose einen Innenraum zur Aufnahme von elektrischen Installationsgeräten ausbildet. Die Erfindung betrifft auch ein Verfahren zum Montieren einer Unterputzdose mittels einer erfindungsgemäßen Montagehilfe und eine Anordnung mit wenigstens einer Unterputzdose und wenigstens einer erfindungsgemäßen Montagehilfe.

Unterputzdosen für elektrische oder datentechnische Installationsgeräte werden üblicherweise in zuvor gebohrte Löcher oder Ausfräsungen, allgemein Ausnehmungen, einer Wand, die typischerweise aus Mauerwerk besteht, eingebracht und mittels schnellabbindendem Gips dort fixiert. Hierzu wird Gips angerührt, in die vorgefertigten Ausnehmungen mittels einer Spachtel eingebracht und dann werden die Unterputzdosen positionsgerecht und lotgerecht eingesetzt. Üblicherweise werden maximal vier Stück aneinandergereiht, es kann aber durchaus auch eine größere Anzahl von Unterputzdosen aneinander gereiht und fixiert werden. In einem solchen Fall müssen dann Spezialabdeckungen verwendet werden. Hierbei ist es sehr wichtig, dass der Gips die richtige Konsistenz hat und schnell abbindet, damit sich die Unterputzdosen während des Abbindevorgangs des Gipses nicht verschieben. Der Zeitaufwand für die Anordnung der Unterputzdosen ist relativ hoch, da die gebohrten oder gefrästen Ausnehmungen zunächst genässt werden müssen und, aufgrund der erforderlichen schnellen Abbindung des Gipses, immer nur für maximal drei bis vier Unterputzdosen Gips angerührt werden kann. Ferner muss die Abbindezeit des Gipses beachtet werden und die Unterputzdosen müssen während des Abbindens des Gipses fixiert werden bzw. dürfen sich während des Abbindens nicht verschieben.

Bekannt ist darüber hinaus das sogenannte Klemmfix-System, bei dem eine ringförmige Montagehilfe an den Boden einer Unterputzdose geklipst wird, um die Unterputzdose in einem Loch im Mauerwerk zu fixieren. Die Montagehilfe hat an gegenüberliegenden Seiten zwei Halteelemente mit um 90° abgebogenen Enden, um die Unterputzdose in einer definierten Tiefe in der Ausnehmung in der Wand zu fixieren. Diese Halteelemente sind aus einem Hartkunststoff gebildet, um eine definierte Lage der Unterputzdose in der Ausnehmung zu garantieren. Eine dem Klemmfix-System entsprechende Montagehilfe ist in dem deutschen Gebrauchsmuster DE 87 07 557 U1 beschrieben.

Aus der deutschen Offenlegungsschrift DE 36 39 514 A1 ist eine weitere Montagehilfe für eine Unterputzdose bekannt. Diese Montagehilfe wird von der Bodenseite her auf eine Unterputzdose aufgeschoben, dort verklemmt und weist zwei Haltelaschen auf, die sich beim Einschieben der Unterputzdose mit der Montagehilfe in eine Ausnehmung umbiegen und dann an der Innenwand der Ausnehmung anliegen, um die Unterputzdose in der Ausnehmung zu fixieren.

Eine weitere Unterputzdose mit Montagehilfe ist aus dem deutschen Gebrauchsmuster DE 295 13 297 U1 bekannt. Eine Unterputzdose ist an ihrer Außenwand mit radial abragenden Klemmvorsprüngen versehen. Diese Klemmvorsprünge legen sich beim Einschieben der Unterputzdose in eine Ausnehmung an die Wand der Ausnehmung an und fixieren dadurch die Unterputzdose in der Ausnehmung.

Aus der deutschen Offenlegungsschrift DE 103 59 004 A1 ist eine Unterputzdose mit einer Montagehilfe bekannt. Die Montagehilfe ist einstückig mit der Unterputzdose verbunden und setzt den zylindrischen Abschnitt der Unterputzdose unterhalb des Bodens fort. Unterhalb des Bodens der Unterputzdose ist dadurch ein Hohlraum gebildet, der durch eine Öffnung im Boden zugänglich ist. Die Unterputzdose ist in einer Ausnehmung anbringbar und die Unterputzdose bildet einen Innenraum zur Aufnahme von elektrischen Installationsgeräten aus. Mittels des unterhalb des Bodens der Unterputzdose gebildeten Hohlraums ist ein Aufnahmebereich für Montageschaum gebildet, der an einer äußeren, dem Innenraum abgewandten Bodenseite der Unterputzdose angeordnet ist. Der Aufnahmebereich in Form der Fortsetzung des zylindrischen Abschnitts der Unterputzdose weist in seiner Umfangswand Schlitze auf, so dass der Montageschaum sich vom Aufnahmebereich in die Ausnehmung hinein ausbreiten und dadurch die Unterputzdose in der Ausnehmung fixieren kann.

Aus der deutschen Offenlegungsschrift DE 199 60 673 A1 ist ein Verteiler-Einbaukasten für die Elektroinstallation bekannt. Der Verteiler-Einbaukasten weist an seiner Rückwand mehrere Kanäle auf, die sich von einer Einspritzöffnung für Montagekleber zu einer Austrittsöffnung für den Montagekleber erstrecken, wobei die Austrittsöffnungen der Kanäle in den Eckbereichen des Verteiler-Einbaukastens liegen. Zum Fixieren des Verteiler-Einbaukastens wird dieser in eine Ausnehmung in einer Wand eingesetzt. Dann wird Montagekleber in die Kanäle eingespritzt, der dann an allen vier Eckbereichen des Verteiler-Einbaukastens wieder austritt und dadurch den Verteiler-Einbaukasten in der Ausnehmung fixiert.

Aus der französischen Offenlegungsschrift FR 2 668 864 A1 ist eine Unterputzdose bekannt, die an einer äußeren, dem Innenraum abgewandten Bodenseite der Unterputzdose mit einem elastischen Element versehen ist. Mittels des elastischen Elements kann die Unterputzdose zwischen zwei Schalungen für Beton eingesetzt und dann mit Beton umgossen werden.

Aus der deutschen Offenlegungsschrift DE 199 58 128 A1 ist ein Deckel für eine Unterputzdose bekannt. Die Unterputzdose weist an einer äußeren, dem Innenraum abgewandten Bodenseite ein elastisches Element auf.

Aus der europäischen Offenlegungsschrift EP 0 303 903 ist eine Unterputzdose zur Aufnahme elektrischer Installationsgeräte bekannt, die auf ihrer radialen Umfangswand mit elastischen Stegen versehen ist. Die elastischen Stege wirken als Klemmmittel, um die Unterputzdose in einer Aufnahmeöffnung festzuklemmen.

Aus der deutschen Gebrauchsmusterschrift DE 20 2008 013 362 U1 ist eine Unterputzdose für elektrische Installationsgeräte bekannt, die an ihrer radialen Umfangswand mit elastischen Stegen versehen ist. Die Stege legen sich an die Innenwand einer Ausnehmung im Mauerwerk an und klemmen dadurch die Unterputzdose in der Ausnehmung ein.

Mit der Erfindung sollen eine Montagehilfe für eine Unterputzdose, ein Verfahren zum Montieren einer Unterputzdose und eine Anordnung mit wenigstens einer Unterputzdose und wenigstens einer Montagehilfe verbessert werden.

Erfindungsgemäß ist hierzu eine Montagehilfe für eine Unterputzdose mit den Merkmalen von Anspruch 1, ein Verfahren zum Montieren einer Unterputzdose mit den Merkmalen von Anspruch 10 und eine Anordnung mit den Merkmalen von Anspruch 12 vorgesehen. Vorteilhafte Weiterbildungen der Erfindung werden in den Unteransprüchen genannt.

Erfindungsgemäß ist eine Montagehilfe für eine Unterputzdose vorgesehen, wobei die Unterputzdose in einer Ausnehmung, insbesondere in Mauerwerk, anbringbar ist und wobei die Unterputzdose einen Innenraum zur Aufnahme von elektrischen Installationsgeräten ausbildet. Die Montagehilfe weist einen Aufnahmebereich für Montageschaum auf, wobei der Aufnahmebereich an einer äußeren, dem Innenraum abgewandten Bodenseite der Unterputzdose angeordnet ist. Der Aufnahmebereich ist so ausgebildet, dass der Montageschaum sich vom Aufnahmebereich in die Ausnehmung hinein ausbreiten kann. Mittels des Montageschaums kann die Unterputzdose in der Ausnehmung fixiert werden. Mit der erfindungsgemäßen Montagehilfe wird die einfache und sehr schnelle Montage von Unterputzdosen ermöglicht. Der Aufnahmebereich ermöglicht es, den Montageschaum zielgerichtet in den Bereich zwischen dem Grund der Ausnehmung und dem Boden der Unterputzdose einzubringen. Der Montageschaum kann dann den Zwischenraum zwischen dem Boden der Unterputzdose und dem Grund der Ausnehmung füllen und sich gegebenenfalls auch noch in den Spalt zwischen der Innenwand der Ausnehmung und der Umfangswand der Unterputzdose ausbreiten. Der Aufnahmebereich verhindert vor allem, dass der Montageschaum nach dem Einbringen sofort der Schwerkraft folgend nach unten abfließt und sich dadurch nicht mehr in dem vorgesehenen Bereich zwischen dem Boden der Unterputzdose und dem Grund der Ausnehmung ausbreitet. Die primäre Funktion des Aufnahmebereichs ist damit, zu verhindern, dass der Montageschaum unmittelbar nach dem Einbringen oder Einspritzen im noch flüssigen Zustand der Schwerkraft folgend nach unten abfließt. Der Aufnahmebereich hält den Montageschaum im Bereich der äußeren Bodenseite der Unterputzdose, bis der Montageschaum sich ausreichend stark ausgedehnt hat, um zumindest den Bereich zwischen der äußeren Bodenseite der Unterputzdose und dem Grund der Ausnehmung zu füllen, um dadurch die Unterputzdose mit der Ausnehmung zu verbinden und in dieser zu fixieren. Der Montageschaum bewirkt eine Fixierung dabei zum einen durch das Ausfüllen des Zwischenraums zwischen der Unterputzdose und der Ausnehmung und darüber hinaus auch durch eine Klebewirkung, einerseits an der Unterputzdose und andererseits an der Ausnehmung. In überraschend einfacher Weise ermöglicht es der Aufnahmebereich, Unterputzdosen problemlos und schnell mittels Montageschaum zu fixieren. Der verwendete Montageschaum kann dabei konventionell und beispielsweise als Zwei-Komponenten-Montageschaum ausgebildet sein. Da der Aufnahmebereich das Abfließen des noch fließfähigen Montageschaums unmittelbar nach dem Einbringen verhindert, kann der Montageschaum vergleichsweise langsam aufschäumen, da durch den Aufnahmebereich das Abfließen des Montageschaums im noch flüssigen Zustand verhindert ist.

In Weiterbildung der Erfindung ist die Montagehilfe mit einer Außenseite der Unterputzdose verbindbar.

Die Montagehilfe kann beispielsweise in sehr einfacher Weise aufgerastet oder aufgeschoben und dadurch an der Unterputzdose festgeklemmt werden. Dadurch können konventionelle Unterputzdosen verwendet werden. Die Montagehilfe kann beispielsweise aus Kunststoff bestehen, beispielsweise aber auch aus stabilem Papier oder Karton.

In Weiterbildung der Erfindung weist die Montagehilfe eine Rasteinrichtung oder eine Klemmeinrichtung zum Verbinden mit der Unterputzdose auf.

Mittels einer Rasteinrichtung oder Klemmeinrichtung kann die Montagehilfe stabil mit der Unterputzdose verbunden werden, so dass auch im rauen Baustellenbetrieb kein unbeabsichtigtes Lösen der Montagehilfe von der Unterputzdose zu befürchten ist.

In Weiterbildung der Erfindung sind die Montagehilfe und die Unterputzdose einstückig ausgebildet.

Beispielsweise können die Montagehilfe und die Unterputzdose einstückig aus Kunststoff hergestellt werden. Die Montagehilfe kann dabei zumindest abschnittsweise aus einem weicheren, elastischen Kunststoff hergestellt werden. Dies ist bei einstückiger Fertigung beispielsweise durch ein Zwei-Komponenten-Spritzverfahren möglich.

In Weiterbildung der Erfindung weist der Aufnahmebereich zum Aufnehmen von Montageschaum eine Leistenstruktur mit wenigstens einer Leiste auf.

In sehr einfacher Weise wird der Montageschaum auf die Leiste aufgebracht und die Leiste verhindert dann, dass der Montageschaum der Schwerkraft folgend nach unten abfließt.

In Weiterbildung der Erfindung erstreckt sich die wenigstens eine Leiste von der äußeren Bodenseite der Unterputzdose aus parallel zur Mittelachse der Unterputzdose von der äußeren Bodenseite weg.

Auf diese Weise kann der Montageschaum in sehr einfacher Weise durch den Boden der Unterputzdose hindurch auf die Leiste aufgebracht werden. Hierzu weist die Unterputzdose zweckmäßigerweise eine passende Öffnung auf oder eine passende Öffnung wird aus dem Boden der Unterputzdose herausgebrochen. Konventionelle Unterputzdosen weisen auch im Bodenbereich Sollbruchstellen auf, um gegebenenfalls Kabel in den Innenraum der Unterputzdose einführen zu können. Eine solche Einführöffnung kann problemlos für das Einbringen des Montageschaums verwendet werden. Montageschaum wird üblicherweise in Dosen geliefert, die mit einem Schlauchstück versehen sind, durch die der Montageschaum dann ausgebracht wird. Dieses Schlauchstück kann dann beispielsweise durch eine Öffnung im Boden der Unterputzdose gesteckt werden, um den Montageschaum dann unmittelbar auf der Leiste aufzubringen, wobei die Leiste dann zwischen der äußeren Bodenseite der Unterputzdose und dem Grund der Ausnehmung angeordnet ist und das der Schwerkraft folgende Abfließen des Montageschaums im noch flüssigen Zustand nach unten verhindert.

In Weiterbildung der Erfindung weist die Leistenstruktur zwei L-förmig angeordnete und sich von der äußeren Bodenseite der Unterputzdose weg erstreckende Leisten auf.

Auf diese Weise ist die Leistenstruktur für zwei unterschiedliche, um 90° zueinander gedrehte Einbaupositionen der Unterputzdose geeignet. Je nachdem, welche Einbauposition der Unterputzdose gewählt wird, ist eine der beiden L-förmig angeordneten Leisten so angeordnet, dass sie das Abfließen des noch flüssigen Montageschaums der Schwerkraft folgend nach unten verhindert.

In Weiterbildung der Erfindung ist die wenigstens eine Leiste flexibel ausgebildet, wobei die Leiste beim Einschieben der Unterputzdose mit der Montagehilfe in die Ausnehmung bei Kontakt mit der Ausnehmung verformbar ist.

Die wenigstens eine Leiste ist in einem verbauten Zustand der Unterputzdose mit der Montagehilfe zwischen der äußeren Bodenseite der Unterputzdose und dem Grund der Ausnehmung angeordnet und das der Schwerkraft folgende Abfließen des Montageschaums im noch flüssigen Zustand nach unten wird somit verhindert. Durch eine flexible Ausgestaltung, beispielsweise durch eine entsprechende Materialwahl für ein Material der wenigstens einen Leiste, kann die Unterputzdose mit der Montagehilfe aufgrund einer Verformung der wenigstens einen Leiste noch weiter in die Ausnehmung eingeschoben werden. Die Verformung der wenigstens einen Leiste tritt dann ein, wenn die wenigstens eine Leiste beim Einschieben der Unterputzdose mit der Montagehilfe in die Ausnehmung bereits an dem Grund der Ausnehmung anliegt und die Unterputzdose mit der Montagehilfe noch weiter in die Ausnehmung eingeschoben werden soll. Zum einen ergibt sich dadurch eine einfachere Handhabung, da eine Tiefe der Ausnehmung nicht mehr genau beachtet werden muss, zum anderen ergibt sich durch die Verformung der wenigstens einen Leiste sowie einer flexiblen Anpassung der zumindest einen Leiste an den Grund der Ausnehmung eine gewisse Abdichtung zwischen der Unterputzdose mit der Montagehilfe und der Ausnehmung, sodass das der Schwerkraft folgende Abfließen des Montageschaums im noch flüssigen Zustand nach unten somit verhindert wird.

In Weiterbildung der Erfindung ist die wenigstens eine Leiste aus flexiblem Material glatt oder ziehharmonikaartig ausgebildet.

Die wenigstens eine Leiste ist stabil genug ausgebildet, um den auf ihr eingebrachten Montageschaum zu halten, jedoch aber so flexibel, dass das Einschieben der Unterputzdose mit der Montagehilfe in die Ausnehmung nicht behindert wird, sobald die wenigstens eine Leiste an dem Grund der Ausnehmung anliegt sowie die Abdichtung zwischen der Unterputzdose mit der Montagehilfe und der Ausnehmung erfolgen kann. Die glatt ausgebildete flexible Leiste verformt sich bei Kontakt mit dem Grund der Ausnehmung beim Einschieben der Unterputzdose mit der Montagehilfe in die Ausnehmung und weicht infolgedessen auch zu einer Seite aus. Eine gefaltete, ziehharmonikaartige Ausgestaltung der wenigstens einen Leiste, insbesondere einer Form einer Ziehharmonika nachempfunden, ist insofern vorteilhaft, dass die Verformung der wenigstens einen Leiste, insbesondere eine Stauchung entlang einer Einschubbewegung der Unterputzdose in die Ausnehmung, von der wenigstens einen Leiste selbst aufgenommen wird, indem sich die ziehharmonikaartige Leiste zumindest abschnittsweise zusammenfaltet.

In Weiterbildung der Erfindung weist die Montagehilfe wenigstens zwei elastische Stege auf, die in einem mit der Unterputzdose verbundenen Zustand der Montagehilfe zumindest abschnittsweise radial von der Mittelachse der Unterputzdose nach außen verlaufen.

Mittels solcher elastischer Stege kann die Unterputzdose in der vorgesehenen Endposition, beispielsweise konzentrisch zu der Ausnehmung, vorfixiert werden. Beim Einschieben der mit der Montagehilfe versehenen Unterputzdose legen sich die elastischen Stege an die Innenwand der Ausnehmung an und halten die Unterputzdose damit in einem Abstand von der Innenwand der Ausnehmung. In diesem vorfixierten Zustand kann dann der Montageschaum eingebracht werden, der dann einen Raum zwischen der äußeren Bodenseite der Unterputzdose und dem Grund der Ausnehmung sowie gegebenenfalls zwischen der Umfangswand der Unterputzdose und der Innenwand der Ausnehmung wenigstens teilweise ausfüllt, aushärtet und dadurch die Unterputzdose in der Ausnehmung fixiert. Die elastischen Stege können dabei von dem sich ausbreitenden Montageschaum umschäumt werden.

In Weiterbildung der Erfindung verlaufen die elastischen Stege in einem mit der Unterputzdose verbundenen Zustand der Montagehilfe auf Höhe der äußeren Bodenseite der Unterputzdose oder im Bereich der Mitte der Unterputzdose von der Unterputzdose aus nach außen.

Unterputzdosen sind in unterschiedlichen Längen verfügbar. Kurze Unterputzdosen können dabei mittels der elastischen Stege vorfixiert werden, wenn diese auf Höhe der äußeren Bodenseite der Unterputzdose nach außen verlaufen. Längere Unterputzdosen können besser durch Stege vorfixiert werden, die im Bereich der Mitte der Unterputzdose von der Unterputzdose aus nach außen verlaufen.

In Weiterbildung der Erfindung weisen die elastischen Stege eine Längeneinteilung auf. Die elastischen Stege biegen sich beim Einschieben der Unterputzdose mit der Montagehilfe um und liegen dann in ihrem Endbereich etwa parallel an der Innenwand der Ausnehmung an.

Mittels einer Längeneinteilung kann festgestellt werden, wie tief die Unterputzdose in die Ausnehmung eingeschoben ist.

In Weiterbildung der Erfindung sind die elastischen Stege mit Sollbruchstellen zum Kürzen der elastischen Stege versehen.

Auf diese Weise kann die Montagehilfe in sehr einfacher Weise an die jeweiligen Rahmenbedingungen des Einbaus, speziell die Abmessungen der Ausnehmung, angepasst werden.

In Weiterbildung der Erfindung weisen die elastischen Stege eine Länge von mindestens 15 mm, vorzugsweise aber von mindestens 20 mm, auf.

Das der Erfindung zugrunde liegende Problem wird auch durch ein Verfahren zum Montieren einer Unterputzdose mittels einer erfindungsgemäßen Montagehilfe und Montageschaum mit folgenden Schritten gelöst: Einsetzen der Unterputzdose und der mit der Unterputzdose verbundenen Montagehilfe in eine Ausnehmung, insbesondere in Mauerwerk, Ausrichten der Unterputzdose in der Ausnehmung, Einbringen von Montageschaum in den Aufnahmebereich an der äußeren Bodenseite der Unterputzdose, wobei der Montageschaum aus dem Aufnahmebereich in die Ausnehmung hinein austritt und Fixieren der Unterputzdose in der Ausnehmung durch das Aushärten des Montageschaums.

Das erfindungsgemäße Verfahren zum Montieren einer Unterputzdose ist wesentlich einfacher und schneller auszuführen als das konventionelle Eingipsen von Unterputzdosen. Speziell muss die Unterputzdose mit der Montagevorrichtung lediglich in die Ausnehmung eingesetzt werden und dann wird Montageschaum in den Aufnahmebereich eingebracht, beispielsweise eingespritzt. Der Aufnahmebereich verhindert ein Abfließen des unmittelbar nach dem Einbringen noch flüssigen Montageschaums der Schwerkraft folgend nach unten, so dass dieser im Bereich der äußeren Bodenseite der Unterputzdose gehalten wird und sich dort ausdehnen kann. Der Montageschaum füllt dadurch sehr schnell einen Zwischenraum zwischen der äußeren Bodenseite der Unterputzdose und dem Grund der Ausnehmung. Gegebenenfalls breitet sich der Montageschaum noch in den Zwischenraum zwischen der äußeren Umfangswand der Unterputzdose und der Innenwand der Ausnehmung aus. Sobald der Montageschaum wenigstens teilweise ausgehärtet ist, ist die Unterputzdose dann in der Ausnehmung sicher fixiert. Die Unterputzdose kann gemäß dem erfindungsgemäßen Verfahren dadurch innerhalb weniger Sekunden montiert werden. Wenn die erfindungsgemäße Montagehilfe mit elastischen Stegen versehen ist, kann das Ausrichten der Unterputzdose in der Ausnehmung mittels der elastischen Stege erfolgen. Die elastischen Stege klemmen die Unterputzdose in der Ausnehmung fest. Dadurch können zahlreiche Unterputzdosen mittels der Montagehilfe in den jeweiligen Ausnehmungen vorfixiert werden und zum endgültigen Fixieren wird dann nacheinander in die Aufnahmebereiche Montageschaum eingespritzt. Dadurch kann das Montieren auch von zahlreichen Unterputzdosen äußert rationell und schnell erfolgen.

In Weiterbildung der Erfindung ist das Verbinden der Montagehilfe mit der Unterputzdose mittels Verrasten oder Klemmen vorgesehen.

Das der Erfindung zugrunde liegende Problem wird auch durch eine Anordnung mit wenigstens einer Unterputzdose, wenigstens einer erfindungsgemäßen Montagehilfe, Montageschaum und einer Ausnehmung, insbesondere in Mauerwerk, gelöst, wobei die Montagehilfe mit der Unterputzdose verbunden ist, wobei die Montagehilfe und die Unterputzdose in der Ausnehmung angeordnet sind und wobei der Aufnahmebereich und ein Zwischenraum zwischen einer Außenseite der Unterputzdose und einer Innenwand der Ausnehmung wenigstens teilweise mit ausgehärtetem Montageschaum ausgefüllt ist, so dass der Montageschaum die Unterputzdose und die Montagehilfe in der Ausnehmung fixiert.

In Weiterbildung der Erfindung weist die Montagehilfe wenigstens zwei elastische Stege auf, die abschnittsweise annähernd parallel zur Mittelachse der Unterputzdose umgebogen sind und an einer inneren Begrenzungsfläche der Ausnehmung anliegen.

Mittels der elastischen Stege kann eine Vorfixierung der Unterputzdose in der Ausnehmung noch vor dem Einbringen des Montageschaums erfolgen. Während des Einbringens des Montageschaums muss die Unterputzdose dadurch nicht in ihrer vorgesehenen Endposition gehalten werden.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang gezeigt oder beschrieben sind. In den Zeichnungen zeigen:
- Fig. 1: eine erfindungsgemäße Montagehilfe in einer Ansicht von schräg hinten,
- Fig. 2: die Montagehilfe der Fig. 1 und eine konventionelle Unterputzdose vor dem Verbinden der Montagehilfe mit der Unterputzdose,
- Fig. 3: die Unterputzdose und die Montagehilfe der Fig. 2 im miteinander verbundenen Zustand,
- Fig. 4: die Unterputzdose mit Montagehilfe der Fig. 3 in einer Ansicht von hinten,
- Fig. 5: eine Anordnung mit einer Ausnehmung in einer Wand sowie einer Unterputzdose und einer erfindungsgemäßen Montagehilfe in der Ausnehmung,
- Fig. 6: eine Montagehilfe gemäß einer weiteren Ausführungsform der Erfindung im verbundenen Zustand mit einer Unterputzdose,
- Fig. 7: eine Montagehilfe gemäß einer nochmals weiteren Ausführungsform der Erfindung in einer Ansicht von schräg hinten und
- Fig. 8: eine Montagehilfe gemäß der nochmals weiteren Ausführungsform der Erfindung im verbundenen Zustand mit einer Unterputzdose.

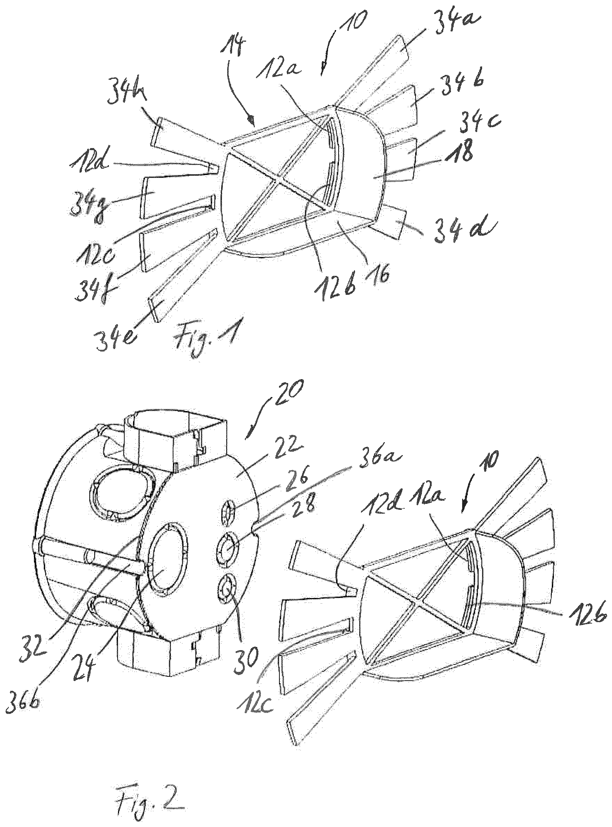

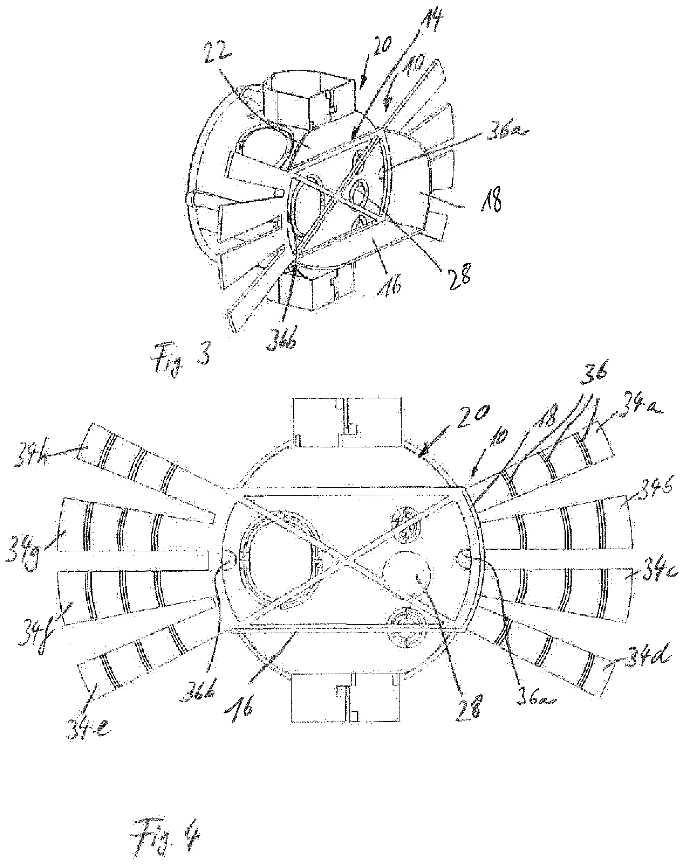

Fig. 1 zeigt eine Montagehilfe 10 gemäß einer ersten Ausführungsform der Erfindung. Die Montagehilfe ist für die Verbindung mit einer konventionellen Unterputzdose vorgesehen, siehe die Fig. 2 und 3, und hierzu mit insgesamt vier Rastvorsprüngen 12a, 12b, 12c und 12d versehen. Alle Rastvorsprünge 12a, 12b, 12c und 12d sind in der Darstellung der Fig. 1 teilweise verdeckt. Die Rastvorsprünge werden auf den äußeren Rand des Bodens einer Unterputzdose aufgerastet, siehe Fig. 2 und Fig. 3, und weisen hierzu jeweils eine L-artige Querschnittsform auf.

Die Montagehilfe 10 weist einen Grundträger 14 auf, der eben ausgebildet und mittels mehrerer Streben realisiert ist. Der Grundträger 14 könnte beispielsweise auch plattenförmig aufgebaut sein. Um Material einzusparen, ist der Grundträger 14 in der dargestellten Ausführungsform mittels mehrerer Streben, bei der dargestellten Ausführungsform insgesamt sechs Streben, realisiert. Vier der Streben definieren den Außenumfang des Grundträgers 14 und die links bzw. rechts in Fig. 1 angeordneten Streben sind gekrümmt ausgeführt, um der runden Form des Bodens der Unterputzdose angepasst zu sein. Auf der, im montierten Zustand dem Boden der Unterputzdose zugewandten Seite des Trägers 14 sind die Rastvorsprünge 12a, 12b, 12c und 12d angeordnet. Zusammen mit zwei geradlinig verlaufenden Streben, die in Fig. 1 oben bzw. unten am Grundträger 14 angeordnet sind, definieren die beiden links bzw. rechts angeordneten gekrümmten Streben den Außenumfang des Grundträgers 14. Zwei sich kreuzende Streben versteifen den Grundträger 14.

Auf einer, im montierten Zustand der Unterputzdose abgewandten Seite des Grundträgers 14 sind zwei Leisten 16, 18 angeordnet, die zusammen eine L-förmige Leistenstruktur bilden. Die beiden Leisten 16, 18 definieren zusammen mit dem Grundträger 14 Begrenzungen eines Aufnahmebereichs für Montageschaum. Im montierten Zustand der Montagehilfe 10, siehe Fig. 3, erstreckt sich die Leiste 16 parallel zur Mittellängsachse der Unterputzdose 20 von der äußeren Bodenseite der Unterputzdose 20 weg. In gleicher Weise erstreckt sich die Leiste 18 parallel zur Mittellängsachse der Unterputzdose 20 von der äußeren Bodenseite der Unterputzdose 20 weg. Die Leiste 18 ist gekrümmt ausgebildet und setzt dadurch den Außenumfang der Unterputzdose 20 fort.

In der in Fig. 3 und Fig. 4 dargestellten Einbaulage der Unterputzdose verhindert die Leiste 16, dass in den Aufnahmebereich oberhalb der Leiste 16 eingebrachter, noch flüssiger Montageschaum der Schwerkraft folgend nach unten abfließt. Wird die Unterputzdose mit der Montagehilfe ausgehend vom Zustand der Fig. 3 oder Fig. 4 um 90° im Uhrzeigersinn gedreht, verhindert die Leiste 18, dass in den Aufnahmebereich oberhalb der Leiste 18 eingebrachter, noch flüssiger Montageschaum der Schwerkraft folgend nach unten abfließt.

Fig. 2 zeigt die Montagehilfe 10 der Fig. 1 und eine konventionelle Unterputzdose 20 im noch nicht verbundenen Zustand. Die Unterputzdose 20 weist einen Boden 22 auf, in dem mehrere Öffnungen 24, 26, 28, 30 vorgesehen sind, die im Zustand der Fig. 2 noch alle mittels Platten verschlossen sind. Die Platten sind mit Sollbruchstellen mit der Berandung der Öffnung verbunden, so dass die Öffnungen 24, 26, 28, 30 in sehr einfacher Weise durch Herausbrechen der Platten hergestellt werden können. Auf der rechten und linken Seite der Unterputzdose 20 ist jeweils ein Kanal 36a, 36b angeordnet. Diese Kanäle entstehen bei der Produktion der Unterputzdose 20 mittels Kunststoffspritzguss und können einen Zugang zum Innenraum der Unterputzdose 20 haben.

Wie bereits erläutert wurde, wird die Montagehilfe auf den Boden 22 der Unterputzdose 20 aufgesetzt und dann in Richtung auf den Boden 22 gedrückt, bis die Rastvorsprünge 12a, 12b, 12c, 12d über einen Wulst 32 am Außenrand des Bodens 22 schnappen. Dadurch kann die Montagehilfe 10 sicher an der Unterputzdose 20 befestigt werden.

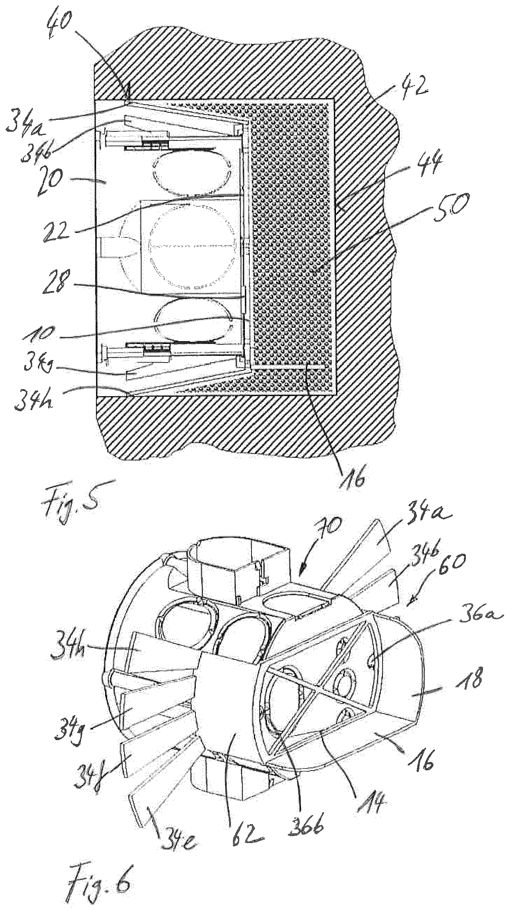

Die Montagehilfe 10 weist darüber hinaus insgesamt acht elastische Stege 34a bis 34h auf. Die elastischen Stege 34a bis 34d sind im Zustand der Fig. 1 jeweils fluchtend zum Grundträger 14 angeordnet und erstrecken sich in radialer Richtung von der in Fig. 1 rechts angeordneten Strebe des Grundträgers 14 weg. Die elastischen Stege 34e bis 34h sind ebenfalls fluchtend zum Grundträger 14 angeordnet und erstrecken sich in radialer Richtung von der in Fig. 1 links angeordneten gekrümmten Strebe des Grundträgers 14 weg. Im montierten Zustand der Montaghilfe 10, siehe Fig. 3 und Fig. 4, erstrecken sich die elastischen Stege 34a bis 34h in radialer Richtung von der Unterputzdose 20 weg. Die elastischen Stege 34a bis 34h sind jeweils plattenförmig ausgebildet. Beim Einschieben der Unterputzdose 20 mit der daran befestigten Montagehilfe 10 in eine Ausnehmung werden die elastischen Stege 34a bis 34h umgebogen und liegen dann abschnittsweise an der Innenwand der Ausnehmung an, in die die Unterputzdose 20 eingeschoben wurde, vgl. Fig. 5.

Fig. 3 zeigt den Zustand, in dem die Unterputzdose 20 mit der Montagehilfe 10 dadurch verbunden wurde, dass die Montagehilfe 10 auf den Boden 22 der Unterputzdose 20 aufgerastet wurde. Zwischen der in Fig. 3 dem Betrachter zugewandten Rückseite des Grundträgers 14 der Montagehilfe 10 und der Leiste 16 ist nun oberhalb der Leiste 16 ein Aufnahmebereich für Montageschaum definiert. In Fig. 3 nach rechts hin wird der Aufnahmebereich durch die Leiste 18 begrenzt. Im Zustand der Fig. 3 kann Montageschaum in den Aufnahmebereich oberhalb der Leiste 16 eingebracht werden und die Leiste 16 verhindert dann das der Schwerkraft folgende Abfließen des noch flüssigen Montageschaums nach unten.

Wird die Unterputzdose 20 ausgehend vom Zustand der Fig. 3 um 90° im Uhrzeigersinn gedreht, wird der Montageschaum wieder in den Aufnahmebereich eingebracht, der dann oberhalb der Leiste 18 angeordnet ist. Die Leiste 18 verhindert dann das der Schwerkraft folgende Abfließen des unmittelbar nach dem Einbringen noch flüssigen Montageschaums nach unten.

Im Zustand der Fig. 3 ist die Öffnung 28 im Boden 22 der Unterputzdose 20 noch verschlossen.

Im Zustand der Fig. 4, der die Unterputzdose 20 und die Montagehilfe 10 von hinten zeigt, ist die Öffnung 28 aber bereits offen, da die in Fig. 3 noch sichtbare Platte in der Öffnung 28 herausgebrochen wurde. Über die Öffnung 28 kann nun Montageschaum aus einer Sprühdose im flüssigen Zustand in den Aufnahmebereich oberhalb der Leiste 16 eingebracht werden. Auch über die Kanäle 36a, 36b kann Montageschaum im flüssigen Zustand in den Aufnahmebereich oberhalb der Leiste 16 eingebracht werden.

In der Darstellung der Fig. 4 ist zu erkennen, dass die elastischen Stege 34a bis 34h jeweils mit drei Sollbruchstellen 36 versehen sind, die gleichzeitig als Längenmarkierungen dienen. Die elastischen Stege 34a bis 34h können somit gekürzt werden, indem sie wahlweise an einer der Sollbruchstellen 36 abgebrochen werden. Die Sollbruchstellen 36 dienen gleichzeitig als Längenmarkierungen und im montierten Zustand der Unterputzdose 20, siehe Fig. 5, kann dann, wenn die elastischen Stege 34a bis 34h nicht vollständig in der Ausnehmung 40 angeordnet sind, festgestellt werden, wie weit sich die Unterputzdose 20 in die Ausnehmung 40 hineinerstreckt.

Fig. 5 zeigt die Unterputzdose 20 mit der Montagehilfe 10 im montierten Zustand in einer Ausnehmung 40 in einem Mauerwerk 42. Es ist zu erkennen, dass sich beim Einschieben der Unterputzdose 20 mit der am Boden der Unterputzdose 20 befestigten Montagehilfe 10 die elastischen Stege 34 umgebogen haben und nun in dem Zwischenraum zwischen der Umfangswand der Unterputzdose 20 und der Innenwand der Ausnehmung 40 angeordnet sind. Die Darstellung der Fig. 5 ist in Bezug auf die Biegung der elastischen Stege 34 schematisch. Die elastischen Stege 34 werden sich ausgehend vom Grundträger 14 zunächst noch ein Stück radial nach außen erstrecken und dann gekrümmt weiterverlaufen. Ein freies Ende der elastischen Stege 34 wird dann in der Realität annähernd parallel zur Innenwand der Ausnehmung 40 verlaufen.

Bereits anhand der schematischen Darstellung der Fig. 5 ist aber zu erkennen, dass die Unterputzdose 20 mittels der elastischen Stege 34 alleine durch Einschieben in die Ausnehmung 40 vorfixiert werden kann. Die elastischen Stege 34 halten die Unterputzdose 20 in einer Position, die konzentrisch zur Ausnehmung 40 ist.

In dieser vorfixierten Position wird dann Montageschaum durch die Öffnung 28 im Boden 22 der Unterputzdose 20 oder gegebenenfalls auch über die Kanäle 36a, 36b in den Aufnahmeraum eingebracht bzw. eingespritzt, der in Fig. 5 oberhalb der Leiste 16 der Montagehilfe 10 liegt. Nach dem Einspritzen, insbesondere durch die Öffnung 28, wird der noch flüssige Montageschaum ein Stück weit nach unten abfließen, bis er auf der Oberseite der Leiste 16 aufliegt. Die Leiste 16 verhindert dann das Abfließen des Montageschaums nach unten. In dieser Position im Aufnahmeraum oberhalb der Leiste 16 kann der Montageschaum 50 dann aufschäumen und sich ausdehnen und füllt, wie in Fig. 5 dargestellt ist, dann den Zwischenraum zwischen der Bodenplatte 22 bzw. dem Grundträger 14 und dem Grund 44 der Ausnehmung 40 aus und dringt auch noch ein Stück weit in den Zwischenraum zwischen der Umfangswand der Unterputzdose 20 und der Innenwand der Ausnehmung 40 ein. Abweichend von der schematischen Darstellung der Fig. 5 kann sich der Montageschaum auch durch die Zwischenräume zwischen den einzelnen elastischen Stegen 34 hindurcherstrecken und dann auch zumindest abschnittsweise an der Umfangswand der Unterputzdose 20 anliegen. Nach dem Aushärten des Montageschaums 50 ist die Unterputzdose 20 dann sicher in der Ausnehmung 40 fixiert.

Fig. 6 zeigt eine weitere Montagehilfe 60 gemäß der Erfindung im verbundenen Zustand mit einer weiteren, konventionellen Unterputzdose 70. Die Unterputzdose 70 ist gegenüber der Unterputzdose 20 der Fig. 2 länger ausgebildet. Die Montagehilfe 60 ist mit Ausnahme zweier Wandabschnitte 62, von denen in Fig. 6 lediglich einer erkennbar ist, identisch zur Montagehilfe 10 der Fig. 1 ausgebildet. Es werden daher lediglich die zur Montagehilfe 10 unterschiedlichen Elemente der Montagehilfe 60 beschrieben. Die Wandabschnitte 62 erstrecken sich ausgehend vom Grundträger 14 von der Leistenstruktur mit den Leisten 16, 18 weg. Im montierten Zustand erstrecken sich die Wandabschnitte 62 somit vom Boden der Unterputzdose 70 weg in Richtung auf deren offenes Ende. Am freien Ende der Wandabschnitte 62 sind die elastischen Stege 34a bis 34h angeordnet. Die elastischen Stege 34a bis 34h können dadurch etwa auf Höhe der Mitte der Längserstreckung der Unterputzdose 70 angeordnet werden, wohingegen sie mit der Montagehilfe 10 auf Höhe des Bodens 22 der Unterputzdose 20 angeordnet werden. Nach dem Einschieben in eine Ausnehmung können dadurch auch die längeren Unterputzdosen 70 sicher und positionsgenau in der Ausnehmung vorfixiert werden, bis der in die Aufnahmeeinrichtung eingebrachte Montageschaum sich ausgedehnt hat, ausgehärtet ist und dadurch für die endgültige Fixierung der Unterputzdose 70 in der Ausnehmung sorgt.

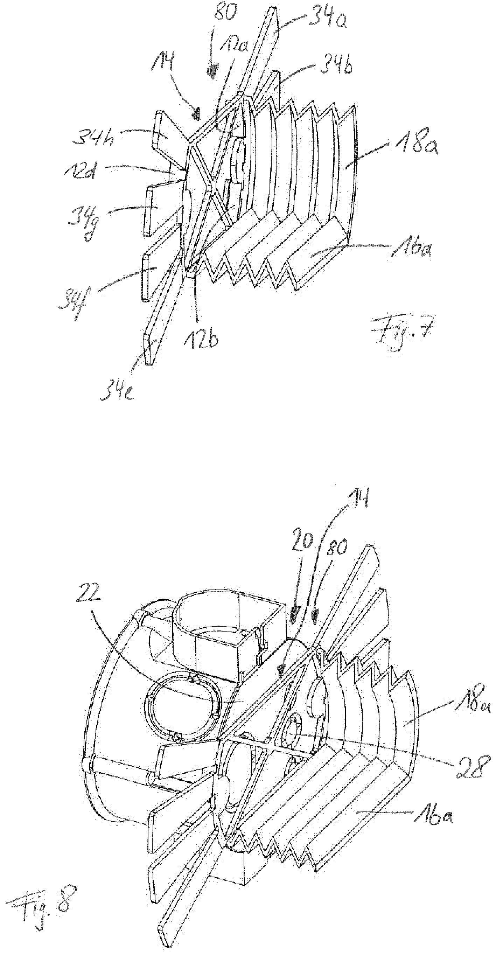

Fig. 7 zeigt eine weitere Montagehilfe 80 gemäß der Erfindung in einer Ansicht von schräg hinten. Die dargestellte Montagehilfe 80 zeigt im Wesentlichen die Merkmale, die bereits anhand der Montagehilfe 10 in der Fig. 1 beschrieben worden sind, weist jedoch als Leistenstruktur eine Leiste 16a sowie eine Leiste 18a auf. Die Leiste 16a und 18a sind entlang einer Einbaurichtung der Unterputzdose 20 mit der Montagehilfe 60 ziehharmonikaartig ausgestaltet.

Fig. 8 zeigt die Montagehilfe 80 gemäß Fig. 7 im verbundenen Zustand mit einer Unterputzdose 20. Die zwei Leisten 16a und 18b sind auf einer im montierten Zustand der Unterputzdose abgewandten Seite des Grundträgers 14 angeordnet, wobei sie zusammen eine L-förmige Leistenstruktur bilden. Wie auch die beiden Leisten 16 und 18 aus den Fig. 1 bis 6 definieren die Leisten 16a und 18a zusammen mit dem Grundträger 14 Begrenzungen eines Aufnahmebereichs für Montageschaum. Im montierten Zustand der Montagehilfe 80 erstreckt sich die Leiste 16a parallel zur Mittellängsachse der Unterputzdose 20 von der äußeren Bodenseite der Unterputzdose 20 weg und liegt bevorzugt am Grund der Ausnehmung 40 an, vergleiche Fig. 5. In gleicher Weise erstreckt sich die Leiste 18a parallel zur Mittellängsachse der Unterputzdose 20 von der äußeren Bodenseite der Unterputzdose 20 weg. Die Leiste 18a ist gekrümmt ausgebildet und setzt dadurch den Außenumfang der Unterputzdose 20 fort.

Es kann durch eine ziehharmonikaartige Ausgestaltung der Leistenstruktur entlang der Einbaurichtung während eines Montageprozesses der Unterputzdose 20 mit der Montagehilfe 80 verhindert werden, dass die Leistenstruktur ein weiteres Einschieben der Unterputzdose 20 mit der Montagehilfe 80 in die Ausnehmung 40 blockiert. Dies wird dadurch erreicht, dass sich die ziehharmonikaartig ausgestaltete Leistenstruktur bei Kontakt mit dem Grund 44 der Ausnehmung 40, siehe Fig. 5, zumindest teilweise zusammenfaltet.

Im montierten Zustand sind die Leisten 16a und 18a durch ihre ziehharmonikaartige Ausgestaltung zumindest abschnittsweise zusammengefaltet, damit ein Kontakt der Leisten 16a und 18a zu dem Grund 44 der Ausnehmung 40 besteht ohne dass die Unterputzdose aus der Ausnehmung 40 hervorsteht, sondern bündig mit einer Sichtfläche des Mauerwerks 42 oder nach innen versetzt in der Ausnehmung 40 angeordnet ist. Dadurch ist gewährleistet, dass die Leistenstruktur mit dem Grund 44 der Ausnehmung 40 insofern abdichtet, dass der Montageschaum 50 nicht im flüssigen Zustand der Schwerkraft folgend nach unten wegfließt.

In einer nicht dargestellten Ausgestaltung kann die in den Fig. 1 bis 6 gezeigte Leistenstruktur glatt und flexibel ausgestaltet sein, so dass sich die Leistenstruktur bei Kontakt mit dem Grund 44 der Ausnehmung 40 zumindest teilweise verformt und zur Seite ausweicht. Auch dadurch kann verhindert werden, dass die Leistenstruktur ein weiteres Einschieben der Unterputzdose 20 mit der Montagehilfe in die Ausnehmung 40 blockiert.

## Patentansprüche

1. Montagehilfe (10; 60; 80) für eine Unterputzdose (20; 70), wobei die Unterputzdose (20; 70) in einer Ausnehmung (40), insbesondere in Mauerwerk (42), anbringbar ist und wobei die Unterputzdose (20; 70) einen Innenraum zur Aufnahme von elektrischen Installationsgeräten ausbildet,
wobei die Montagehilfe (10; 60; 80) einen Aufnahmebereich für Montageschaum (50) aufweist, wobei der Aufnahmebereich an einer äußeren, dem Innenraum abgewandten Bodenseite der Unterputzdose (20; 70) angeordnet ist und wobei der Aufnahmebereich so ausgebildet ist, dass der Montageschaum (50) sich vom Aufnahmebereich in die Ausnehmung (40) hinein ausbreiten kann, um die Unterputzdose (20; 70) in der Ausnehmung (40) zu fixieren, wobei der Aufnahmebereich zum Aufnehmen von Montageschaum (50) eine Leistenstruktur mit wenigstens einer Leiste (16, 18; 16a, 18a) aufweist, **dadurch gekennzeichnet, dass** die Leistenstruktur zwei L-förmig angeordnete und sich von der äußeren Bodenseite der Unterputzdose weg erstreckende Leisten (16, 18; 16a, 18a) aufweist und dass für ein Ausfüllen eines Zwischenraums mit Montageschaum (50) zwischen einer Bodenplatte (22) der Unterputzdose (20; 70) oder einem Grundträger (14) der Montagehilfe (10; 60; 80) und einem Grund (44) der Ausnehmung (40) der Aufnahmebereich in Richtung des Grunds (44) offen ist, wenn die Montagehilfe (10; 60; 80) an die Unterputzdose (20; 70) montiert und in die Ausnehmung (40) eingesetzt ist.

2. Montagehilfe (10; 60; 80) für eine Unterputzdose (20; 70) nach Anspruch 1, **dadurch gekennzeichnet, dass** die Montagehilfe (10; 60; 80) mit einer Außenseite der Unterputzdose (20; 70) verbindbar ist.

3. Montagehilfe (10; 60; 80) für eine Unterputzdose (20; 70) nach Anspruch 2, **dadurch gekennzeichnet, dass** die Montagehilfe (10; 60; 80) eine Rasteinrichtung oder eine Klemmeinrichtung zum Verbinden mit der Unterputzdose (20; 70) aufweist.

4. Montagehilfe (10; 60; 80) für eine Unterputzdose (20; 70) nach Anspruch 1, **dadurch gekennzeichnet, dass** die Montagehilfe (10; 60; 80) und die Unterputzdose (20; 70) einstückig ausgebildet sind.

5. Montagehilfe (10; 60; 80) für eine Unterputzdose (20; 70) nach einem der vorstehenden Ansprüche, **dadurch gekennzeichnet, dass** die wenigstens eine Leiste (16, 18; 16a, 18a) sich, von der äußeren Bodenseite der Unterputzdose (20; 70) aus, parallel zur Mittelachse der Unterputzdose (20; 70) von der äußeren Bodenseite weg erstreckt.

6. Montagehilfe (10; 60; 80) für eine Unterputzdose (20; 70) nach wenigstens einem der vorstehenden Ansprüche, **dadurch gekennzeichnet, dass** die wenigstens eine Leiste (16, 18; 16a, 18a) flexibel ausgebildet ist, wobei die Leiste (16, 18; 16a, 18a) beim Einschieben der Unterputzdose (20; 70) mit der Montagehilfe (10; 60; 80) in die Ausnehmung (40) bei Kontakt mit der Ausnehmung (40) verformbar ist.

7. Montagehilfe (10; 60; 80) für eine Unterputzdose (20; 70) nach Anspruch 6, **dadurch gekennzeichnet, dass** die wenigstens eine Leiste (16, 18; 16a, 18a) aus flexiblem Material glatt oder ziehharmonikaartig ausgebildet ist.

8. Montagehilfe (10; 60; 80) für eine Unterputzdose (20; 70) nach wenigstens einem der vorstehenden Ansprüche, **dadurch gekennzeichnet, dass** die Montagehilfe (10; 60; 80) wenigstens zwei elastische Stege (34a bis 34h) aufweist, die in einem mit der Unterputzdose (20; 70) verbundenen Zustand der Montagehilfe (10; 60; 80) zumindest abschnittsweise radial von der Mittelachse der Unterputzdose (20; 70) nach außen verlaufen und insbesondere die elastischen Stege (34a bis 34h) in einem mit der Unterputzdose (20; 70) verbundenen Zustand der Montagehilfe (10; 60; 80) auf Höhe der äußeren Bodenseite der Unterputzdose (20; 70) oder im Bereich der Mitte der Unterputzdose (20; 70) von der Unterputzdose (20; 70) aus nach außen verlaufen.

9. Montagehilfe (10; 60; 80) für eine Unterputzdose nach Anspruch 8, **dadurch gekennzeichnet, dass** die elastischen Stege (34a bis 34h) eine Längeneinteilung aufweisen und/oder dass die elastischen Stege (34a bis 34h) eine Länge von mindestens 15 mm, vorzugsweise aber von mindestens 20 mm, aufweisen.

10. Verfahren zum Montieren einer Unterputzdose (20; 70) mittels einer Montagehilfe (10; 60; 80) nach wenigstens einem der vorstehenden Ansprüche und Montageschaum (50), mit den Schritten:
- Einsetzen der Unterputzdose (20; 70) und der mit der Unterputzdose (20; 70) verbundenen Montagehilfe (10; 60; 80) in eine Ausnehmung (40), insbesondere in Mauerwerk (42),
- Ausrichten der Unterputzdose (20; 70) in der Ausnehmung (40),
- Einbringen von Montageschaum (50) in den Aufnahmebereich an der äußeren Bodenseite der Unterputzdose (20; 70), wobei der Montageschaum (50) aus dem Aufnahmebereich in die Ausnehmung (40) hinein austritt,
- Ausfüllen eines Zwischenraums mit Montageschaum (50) zwischen einer Bodenplatte (22) der Unterputzdose (20; 70) oder einem Grundträger (14) der Montagehilfe (10; 60; 80) und einem Grund (44) der Ausnehmung (40), wobei der Aufnahmebereich in Richtung des Grunds (44) offen ist, und
- Fixieren der Unterputzdose (20; 70) in der Ausnehmung (40) durch das Aushärten des Montageschaums (50).

11. Verfahren zum Montieren einer Unterputzdose (20; 70) nach Anspruch 10, **gekennzeichnet durch** Verbinden der Montagehilfe (10; 60; 80) mit der Unterputzdose (20; 70) mittels Verrasten oder Klemmen.

12. Anordnung mit wenigstens einer Unterputzdose (20; 70), wenigstens einer Montagehilfe (10; 60; 80) nach wenigstens einem der Ansprüche 1 bis 9, Montageschaum (50) und einer Ausnehmung (40), insbesondere in Mauerwerk (42), wobei die Montagehilfe (10; 60; 80) mit der Unterputzdose (20; 70) verbunden ist, wobei die Montagehilfe (10; 60; 80) und die Unterputzdose (20; 70) in der Ausnehmung (40) angeordnet sind und wobei der Aufnahmebereich und ein Zwischenraum zwischen einer Außenseite der Unterputzdose (20; 70) und einer Innenwand der Ausnehmung (40) wenigstens teilweise mit ausgehärtetem Montageschaum (50) ausgefüllt ist, so dass der Montageschaum (50) die Unterputzdose (20; 70) und die Montagehilfe (10; 60; 80) in der Ausnehmung (40) fixiert.

13. Anordnung nach Anspruch 12, wobei die Montagehilfe (10; 60; 80) wenigstens zwei elastische Stege (34a bis 34h) aufweist, die abschnittsweise annähernd parallel zur Mittelachse der Unterputzdose (20; 70) umgebogen sind und an einer inneren Begrenzungsfläche der Ausnehmung (40) anliegen.

## Claims

1. Installation aid (10; 60; 80) for a flush-mounted box (20; 70), wherein the flush-mounted box (20; 70) can be affixed in a recess (40), in particular in masonry (42), and wherein the flush-mounted box (20; 70) forms an interior space for the reception of electrical installation units, wherein
the installation aid (10; 60; 80) has a reception zone for mounting foam (50), wherein the reception zone is arranged on an external lower face of the flush-mounted box (20; 70), facing away from the interior space, and wherein the reception zone is designed such that the mounting foam (50) can spread from the reception zone into the recess (40), so as to fix the flush-mounted box (20; 70) in the recess (40), wherein the reception zone for the reception of mounting foam (50) has a strip structure with at least one strip (16, 18; 16a, 18a), **characterised in that**,
the strip structure has two strips (16, 18; 16a, 18a), arranged in an L-shape and extending away from the external lower face of the flush-mounted box, and **in that**, for a filling of an intermediate space with mounting foam (50) between a base plate (22) of the flush-mounted box (20; 70), or a base support (14) of the installation aid (10; 60; 80), and a base (44) of the recess (40), the reception zone is open in the direction of the base (44), when the installation aid (10; 60; 80) is mounted on the flush-mounted box (20; 70), and is inserted into the recess (40).

2. Installation aid (10; 60; 80) for a flush-mounted box (20; 70) according to Claim 1, **characterised in that**, the installation aid (10; 60; 80) can be connected to an external face of the flush-mounted box (20; 70).

3. Installation aid (10; 60; 80) for a flush-mounted box (20; 70) according to Claim 2, **characterised in that**, the installation aid (10; 60; 80) has a latching device, or a clamping device, for the connection to the flush-mounted box (20; 70).

4. Installation aid (10; 60; 80) for a flush-mounted box (20; 70) according to Claim 1, **characterised in that**, the installation aid (10; 60; 80) and the flush-mounted box (20; 70) are of an integral design.

5. Installation aid (10; 60; 80) for a flush-mounted box (20; 70) according to one of the preceding claims, **characterised in that**, the at least one strip (16, 18; 16a, 18a) extends, from the external lower face of the flush-mounted box (20; 70), parallel to the central axis of the flush-mounted box (20; 70), away from the external lower face.

6. Installation aid (10; 60; 80) for a flush-mounted box (20; 70) according to at least one of the preceding claims, **characterised in that**, the at least one strip (16, 18; 16a, 18a) is of a flexible design, wherein as the flush-mounted box (20; 70) with the installation aid (10; 60; 80) is slid into the recess (40), the strip (16, 18; 16a, 18a) can be deformed upon contact with the recess (40).

7. Installation aid (10; 60; 80) for a flush-mounted box (20; 70) according to Claim 6, **characterised in that**, the at least one strip (16, 18; 16a, 18a), made from a flexible material, is of a flat or accordion-like design.

8. Installation aid (10; 60; 80) for a flush-mounted box (20; 70) according to at least one of the preceding claims, **characterised in that**, the installation aid (10; 60; 80) has at least two elastic webs (34a to 34h), which, in a state in which the installation aid (10; 60; 80) is connected to the flush-mounted box (20; 70), at least in sections extend radially outwards from the central axis of the flush-mounted box (20; 70), and in particular the elastic webs (34a to 34h), in a state in which the installation aid (10; 60; 80) is connected to the flush-mounted box (20; 70), at the height of the external lower face of the flush-mounted box (20; 70), or in the region of the centre of the flush-mounted box (20; 70), extend outwards from the flush-mounted box (20; 70).

9. Installation aid (10; 60; 80) for a flush-mounted box according to Claim 8, **characterised in that**, the elastic webs (34a to 34h) have a lengthwise segmentation, and/or **in that**, the elastic webs (34a to 34h) have a length of at least 15 mm, but preferably of at least 20 mm.

10. Method for the installation of a flush-mounted box (20; 70) by means of an installation aid (10; 60; 80) according to at least one of the preceding claims, and mounting foam (50), with the steps:
- insertion of the flush-mounted box (20; 70), and the installation aid (10; 60; 80) connected to the flush-mounted box (20; 70), into a recess (40), in particular in masonry (42),
- alignment of the flush-mounted box (20; 70) in the recess (40),
- introduction of mounting foam (50) into the reception zone on the external lower face of the flush-mounted box (20; 70), wherein the mounting foam (50) exits from the reception zone into the recess (40),
- filling of an intermediate space between a base plate (22) of the flush-mounted box (20; 70), or a base support (14) of the installation aid (10; 60; 80), and a base (44) of the recess (40), with mounting foam (50), wherein the reception zone is open in the direction of the base (44), and
- fixation of the flush-mounted box (20; 70) in the recess (40) by the curing of the mounting foam (50) .

11. Method for the mounting of a flush-mounted box (20; 70) according to Claim 10, **characterised by**, connection of the installation aid (10; 60; 80) to the flush-mounted box (20; 70) by means of latching or clamping.

12. Arrangement with at least one flush-mounted box (20; 70), at least one installation aid (10; 60; 80) according to at least one of the Claims 1 to 9, mounting foam (50), and a recess (40), in particular in masonry (42), wherein the installation aid (10; 60; 80) is connected to the flush-mounted box (20; 70), wherein the installation aid (10; 60; 80) and the flush-mounted box (20; 70) are arranged in the recess (40), and wherein the reception zone, and an intermediate space between an external face of the flush-mounted box (20; 70) and an inner wall of the recess (40), is at least partially filled with cured mounting foam (50), so that the mounting foam (50) fixes the flush-mounted box (20; 70) and the installation aid (10; 60; 80) in the recess (40).

13. Arrangement according to Claim 12, wherein the installation aid (10; 60; 80) has at least two elastic webs (34a to 34h), which in sections are curved over to be approximately parallel to the central axis of the flush-mounted box (20; 70), and fit against an inner bounding surface of the recess (40).

## Revendications

1. Auxiliaire de montage (10; 60; 80) d'une prise encastrée (20; 70), la prise encastrée (20; 70) pouvant être montée dans un évidement (40), notamment dans la maçonnerie (42), et la prise encastrée (20; 70) formant un espace intérieur destiné à recevoir des appareils d'installation électrique,
l'auxiliaire de montage (10; 60; 80) comportant une zone de réception de mousse de montage (50), la zone de réception étant placée sur une face extérieure de fond inférieur, opposée à l'espace intérieur de la prise encastrée (20; 70) et la zone de réception étant conçue de telle sorte que la mousse de montage (50) puisse se propager de la zone de réception à l'intérieur de l'évidement (40) pour fixer la prise encastrée (20; 70) dans l'évidement (40), pour réceptionner la mousse de montage (50), la zone de réception comportant une structure de tasseau avec au moins un tasseau (16, 18; 16a, 18a), **caractérisé en ce que**
la structure de tasseau comporte deux tasseaux (16, 18; 16a, 18a) placés en forme de L et s'étendant en s'éloignant de la face extérieure de fond inférieur de la prise encastrée et **en ce que**, pour remplir un espace intermédiaire avec de la mousse de montage (50) entre une plaque d'embase (22) de la prise encastrée (20; 70) ou un support de base (14) de l'auxiliaire de montage (10; 60; 80) et un fond (44) de l'évidement (40), la zone de réception est ouverte en direction du fond (44), lorsque l'auxiliaire de montage (10; 60; 80) est monté sur la prise encastrée (20; 70) et inséré dans l'évidement (40).

2. Auxiliaire de montage (10; 60; 80) d'une prise encastrée (20; 70) selon la revendication 1, **caractérisé en ce que** l'auxiliaire de montage (10; 60; 80) peut s'assembler sur une face extérieure de la prise encastrée (20; 70).

3. Auxiliaire de montage (10; 60; 80) d'une prise encastrée (20; 70) selon la revendication 2, **caractérisé en ce que** l'auxiliaire de montage (10; 60; 80) comporte un dispositif d'enclenchement ou un dispositif de serrage, destiné à être assemblé avec la prise encastrée (20; 70).

4. Auxiliaire de montage (10; 60; 80) d'une prise encastrée (20; 70) selon la revendication 1, **caractérisé en ce que** l'auxiliaire de montage (10; 60; 80) et la prise encastrée (20; 70) sont conçus en monobloc.

5. Auxiliaire de montage (10; 60; 80) d'une prise encastrée (20; 70) selon l'une quelconque des revendications précédentes, **caractérisé en ce que** l'au moins un tasseau (16, 18; 16a, 18a) s'étend à partir de la face extérieure de fond inférieur de la prise encastrée (20; 70), à la parallèle de l'axe médian de la prise encastrée (20; 70), en s'éloignant de la face extérieure de fond inférieur.

6. Auxiliaire de montage (10; 60; 80) d'une prise encastrée (20; 70) selon au moins l'une quelconque des revendications précédentes, **caractérisé en ce que** l'au moins un tasseau (16, 18; 16a, 18a) est conçu en étant flexible, lors de l'insertion de la prise encastrée (20; 70) avec l'auxiliaire de montage (10; 60; 80) dans l'évidement (40), le tasseau (16, 18; 16a, 18a) étant déformable, lors d'un contact avec l'évidement (40) .

7. Auxiliaire de montage (10; 60; 80) d'une prise encastrée (20; 70) selon la revendication 6, **caractérisé en ce que** l'au moins un tasseau (16, 18; 16a, 18a) est conçu en une matière flexible, lisse ou en accordéon.

8. Auxiliaire de montage (10; 60; 80) d'une prise encastrée (20; 70) selon au moins l'une quelconque des revendications précédentes, **caractérisé en ce que** l'auxiliaire de montage (10; 60; 80) comporte au moins deux listels (34a bis 34h) élastiques, qui lorsque l'auxiliaire de montage (10; 60; 80) est assemblé avec la prise encastrée (20; 70) s'écoulent au moins par endroits en direction radiale, de l'axe médian de la prise encastrée (20; 70) vers l'extérieur et lorsque l'auxiliaire de montage (10; 60; 80) est assemblé avec la prise encastrée (20; 70), les listels élastiques (34a à 34h) s'écoulent notamment au niveau de la face extérieure de fond inférieur de la prise encastrée (20; 70) ou dans la zone du centre de la prise encastrée (20; 70) vers l'extérieur à partir de la prise encastrée (20; 70).

9. Auxiliaire de montage (10; 60; 80) d'une prise encastrée selon la revendication 8, **caractérisé en ce que** les listels élastiques (34a bis 34h) comportent une division en longueur et/ou **en ce que** les listels élastiques (34a bis 34h) présentent une longueur d'au moins 15 mm, mais de préférence d'au moins 20 mm.

10. Procédé, destiné à monter une prise encastrée (20; 70) au moyen d'un auxiliaire de montage (10; 60; 80) selon au moins l'une quelconque des revendications précédentes et d'une mousse de montage (50), avec les étapes consistant à :
- Insérer la prise encastrée (20; 70) et l'auxiliaire de montage (10; 60; 80) assemblé avec la prise encastrée (20; 70) dans un évidement (40), notamment dans la maçonnerie (42),
- Aligner la prise encastrée (20; 70) dans l'évidement (40),
- Introduire de la mousse de montage (50) dans la zone de réception sur la face extérieure de fond inférieur de la prise encastrée (20; 70), la mousse de montage (50) sortant à partir de la zone de réception à l'intérieur de l'évidement (40),
- Remplir un espace intermédiaire avec de la mousse de montage (50), entre une plaque d'embase (22) de la prise encastrée (20; 70) ou un support de base (14) de l'auxiliaire de montage (10; 60; 80) et un fond (44) de l'évidement (40), la zone de réception étant ouverte en direction du fond (44), et
- fixer la prise encastrée (20; 70) dans l'évidement (40) par solidification de la mousse de montage (50).

11. Procédé, destiné à monter une prise encastrée (20; 70) selon la revendication 10, **caractérisé par** l'assemblage de l'auxiliaire de montage (10; 60; 80) avec la prise encastrée (20; 70) par enclenchement ou par serrage.

12. Ensemble, comprenant au moins une prise encastrée (20; 70), au moins un auxiliaire de montage (10; 60; 80) selon au moins l'une quelconque des revendications 1 à 9, une mousse de montage (50) et un évidement (40), notamment dans de la maçonnerie (42), l'auxiliaire de montage (10; 60; 80) étant assemblé avec la prise encastrée (20; 70), l'auxiliaire de montage (10; 60; 80) et la prise encastrée (20; 70) étant placés dans l'évidement (40) et la zone de réception et un espace intermédiaire entre une face extérieure de la prise encastrée (20; 70) et une paroi intérieure de l'évidement (40) étant rempli au moins en partie de mousse de montage (50) solidifiée, de telle sorte que la mousse de montage (50) fixe la prise encastrée (20; 70) et l'auxiliaire de montage (10; 60; 80) dans l'évidement (40).

13. Ensemble selon la revendication 12, l'auxiliaire de montage (10; 60; 80) comportant au moins deux listels élastiques (34a bis 34h), qui par endroits sont recourbés approximativement à la parallèle de l'axe médian de la prise encastrée (20; 70) et sont adjacents à une surface de délimitation intérieure de l'évidement (40).
